# EUROPÄISCHE PATENTSCHRIFT

(11) **EP 2 429 894 B1**
(45) Veröffentlichungstag und Bekanntmachung des Hinweises auf die Patenterteilung: **23.11.2016**
(21) Anmeldenummer: 10719336.9
(22) Anmeldetag: 10.05.2010
(51) Int. Cl.: B64C 1/06, B64F 5/00, B64C 1/00

(54) **VERFAHREN ZUR HERSTELLUNG EINES FLUGZEUGRUMPFES UND FLUGZEUGRUMPF**
METHOD FOR PRODUCING AN AIRCRAFT FUSELAGE AND AIRCRAFT FUSELAGE
PROCÉDÉ DE FABRICATION D'UN FUSELAGE D'AVION ET FUSELAGE D'AVION

(30) Priorität: 12.05.2009 DE 102009021369; 12.05.2009 US 177306 P
(43) Veröffentlichungstag der Anmeldung: 21.03.2012
(73) Patentinhaber: Airbus Operations GmbH, 21129 Hamburg (DE)
(72) Erfinder: GORR, Eugen, 21079 Hamburg (DE); BENSE, Rolf, 21635 Jork (DE)
(74) Vertreter: Kopf Westenberger Wachenhausen Patentanwälte PartG mbB
(86) Internationale Anmeldenummer: PCT/EP2010/056362
(87) Internationale Veröffentlichungsnummer: WO 2010/130687

(56) Entgegenhaltungen:
- DE-C- 952 595
- FR-A- 510 388
- FR-A1- 2 915 458
- GB-A- 524 721
- JP-U- H0 414 598

## Beschreibung

Die Erfindung betrifft ein Verfahren zur Herstellung eines Flugzeugrumpfes nach dem Oberbegriff des Patentanspruchs 1.

Aus der deutschen Patentschrift DE 727 196 ist es bekannt, Flugzeugrümpfe aus einer Vielzahl von Rumpftonnen zu bilden. Benachbarte Rumpftonnen werden im Querstoßbereich miteinander verbunden und bilden dabei mit ihren Randabschnitten einen vernieten Überlappstoß. Aufgrund von Fertigungs- bzw. Bauteiltoleranzen kann zwischen den sich überlappenden Randschnitten zumindest abschnittsweise ein Radialspalt entstehen. Bei Rümpfen in Metallbauweise können diese Spalte durch eine entsprechende Verformung der Randabschnitte beim Vernieten geschlossen werden. Zum Reinigen von Nietlöchern und Überlappungsflächen nach dem Bohren sind die Rumpftonnen wieder zu trennen, wodurch der Montageprozess langwierig wird. Weiterhin ist eine hohe Anzahl von Verbindungselementen, insbesondere Nieten und Stringerkupplungen notwendig, was sich ebenfalls nachteilig auf den Montageprozess auswirkt.

Problematisch sind die Toleranzunterschiede zwischen den Rumpftonnen insbesondere bei kohlenstofffaserverstärkten Rümpfen (CFK-Rümpfe), da diese nahezu nicht verformt werden dürfen. Bauteiltoleranzen sind somit durch eine Füllmasse in den Spalten auszugleichen. Die genaue Dosierung und die genaue Positionierung der Füllmasse sind jedoch aufgrund der beschränkten Zugänglichkeit sehr schwierig und zeitintensiv, da insbesondere bei der Herstellung des Überlappstoßes die Füllmasse wegfließen oder durch Scherung beim Montageprozess verschoben werden kann.

Alternativ sieht die US 2006/0060705 A1 vor, CFK-Rumpftonnen nebeneinander zu positionieren und deren benachbarten Randabschnitte mittels einer Querstoßlasche zu vernieten. Doch auch bei dieser bekannten Lösung ist der Toleranzausgleich zwischen den Rumpftonnen durch eine genaue Dosierung und Positionierung der Füllmasse kritisch. Ebenso müssen auch hier während der Montage der Rumpftonnen Nietlöcher in der Querstoßlasche und den Rumpftonnen aufwendig und zeitintensiv gereinigt werden. Ebenfalls ist eine Vielzahl von Verbindungselementen notwendig, die aufgrund der spezifischen Materialeigenschaften im Zusammenhang mit CFK besonders nachteilig sind.

Weiterer Stand der Technik ist aus der FR 510 388 A, der JP H04 14598 U, der DE 952 595 C, der FR 2 915 458 A1 sowie aus der GB 524 721 A bekannt.

Demgegenüber besteht die Aufgabe der vorliegenden Erfindung darin, ein Verfahren zur Herstellung eines Flugzeugrumpfes, das die vorgenannten Nachteile beseitigt und bei dem sich im Wesentlichen ein Toleranzausgleich zwischen sich zu verbindenden Rumpftonnen erübrigt, sowie einen derartig hergestellten Flugzeugrumpf zu schaffen.

Diese Aufgabe wird gelöst durch ein Verfahren mit den Merkmalen des Patentanspruchs 1.

Ein Verfahren zur Herstellung eines Flugzeugrumpfes mit zumindest zwei miteinander zu fügenden Rumpftonnen sieht erfindungsgemäß vor, dass für einen Querstoß zwischen den Rumpftonnen benötigte Querstoßelemente zueinander ausgerichtet und für den Querstoß vorbereitet werden und erst dann in einem Folgeschritt in die Rumpftonnen eingesetzt werden.

Vorteilhaft an dieser Lösung ist, dass im Wesentlichen kein Toleranzausgleich beim Fügen der Rumpftonnen notwendig ist, da die Querstoßelemente bereits vor der Herstellung der Rumpftonnen zueinander ausgerichtet wurden. Somit entstehen gleiche Bauteile mit gleichen Toleranzen. Mit anderen Worten erfolgt erfindungsgemäß erst die provisorische Bildung des Querstoßbereichs und anschließend die Herstellung der Rumpftonnen, wobei die Rumpftonnen um die Querstoßelemente herum aufgebaut werden. Insbesondere ist vorteilhaft, dass die Montage des Rumpfes quasi in einem Schritt erfolgen kann, da die Bohrungen für Verbindungselemente bereits entsprechend vorbereitet sind und somit Verbindungselemente bei der Montage nur noch eingesetzt werden müssen. Ein Entfernen von Spänen oder ein Bohren der Bohrungen auf Endmaß während der Rumpfmontage entfällt.

Es werden als Querstoßelemente zwei ringartige Verbindungssegmente und eine Vielzahl von Verbindungselementen zur Verbindung der Verbindungssegmente verwendet, wobei die ringartigen Verbindungssegmente den Rumpfquerschnitt abbilden. Sie werden zusammengeführt und zueinander ausgerichtet. Dann wird in die Verbindungssegmente eine Vielzahl von Aufnahmen zur Aufnahme der Verbindungselemente eingebracht. Anschließend werden in einem Ausführungsbeispiel die Verbindungssegmente voneinander getrennt und es werden die Rumpftonnen durch Anordnung von Hautfeldern an den Verbindungssegmente geschaffen. Dann werden die Rumpftonnen durch Zusammenführen der beiden Verbindungssegmente und Einsetzen der Verbindungselemente miteinander verbunden. Bei diesem Ausführungsbeispiel ist vorteilhaft, dass weniger Querstoßelemente notwendig sind als bei den bekannten Überlappstößen, wodurch die Montage vereinfacht und die Durchlaufzeit verkürzt ist. Insbesondere fallen aufgrund der damit einhergehenden geringeren Werkzeugvielfalt und Werkzeuganzahl geringere Investitionskosten an. Des Weiteren ist das erfindungsgemäße Verfahren unabhängig von dem Material des Rumpfes sowohl bei Metallrümpfen, faserverstärkten Kunststoffrümpfen oder beispielsweise Sandwichstrukturen wie GLARE^{®} anwendbar.

Ein bevorzugter Flugzeugrumpf hat zumindest zwei Rumpftonnen, die einen Querstoß bilden, und zwei in die Rumpftonnen eingesetzte ringartige Verbindungssegmente, die einen Rumpfquerschnitt im Querstoßbereich abbilden und mit einer Vielzahl von Verbindungselementen miteinander verbunden sind. Da die Verbindungselemente bzw. deren Aufnahmen bereits vor dem Fügen der Rumpftonnen in die Verbindungssegmente eingebracht wurden, entfällt beim Bilden des Querstoßes ein aufwendiger Toleranzsausgleich zwischen den Rumpftonnen.

Bei einem Ausführungsbeispiel sind Verbindungselemente in Bohrungen eingesetzt, die in gegenüberliegenden Radialflächen der Verbindungssegmente eingebracht sind. Im Unterschied zu den bekannten Überlappstößen werden somit nicht Umfangsflächen miteinander verbunden, sondern Radialflächen, wodurch ein günstigerer Kraftverlauf über die Verbindungselemente zwischen den Rumpftonnen ermöglicht wird.

Der erfindungsgemäße Querstoß ist derart belastbar, dass bei geeigneter Wahl der Verbindungselemente diese einreihig nebeneinander zum Verbinden der Rumpftonnen angeordnet sind. Hierdurch wird die Anzahl der Verbindungselemente und somit die Montage weiter vereinfacht.

Insbesondere können die Verbindungselemente im Bereich von Stringern die Verbindungssegmente durchsetzten, so dass auf Stringerkupplungen verzichtet werden kann.

Die Verbindungselemente sind vorzugsweise Zugbolzen. Diese sind sicher auszulegen, einfach zu montieren, austauschbar und kostengünstig.

Die Radialflächen schließen vorzugsweise bündig mit einer jeweiligen Ringfläche der Rumpftonnen ab. Dies ermöglicht bei der Montage einen gleichmäßigen Axialspalt zwischen den Verbindungssegmenten und den Ringflächen. Der Axialspalt kann mit zumindest zwei Dichtelementen mit unterschiedlichen Funktionen bzw. Eigenschaften befüllt sein. Hierdurch können zum Beispiel gezielt eine druckdichte Abdichtung zwischen den Rumpftonnen und optimale aerodynamische Eigenschaften in einem Außenbereich des Axialspalts erzielt werden.

Bevorzugterweise bilden die ringartigen Verbindungssegmente im montierten Zustand einen zweigeteilten Spant. Dies hat den Vorteil, dass die Teileanzahl im Querstoßbereich weiter reduziert wird und der Rumpf gewichtsoptimiert ausführbar ist.

Sonstige vorteilhafte Ausführungsbeispiele sind Gegenstand weiterer Unteransprüche.

Die Verbindungssegmente sind einteilig oder sie bestehen aus mehreren Bogensegmenten. So können sie zum Beispiel ein einteiliges faserverstärktes, gewebtes Kunststoffbauteil sein oder aus metallischen Bogensegmenten zusammengesetzt sein.

Als Verbindungselemente sind neben Zugbolzen auch Nieten, Stifte, Zugstangen und dergleichen vorstellbar.

Die Dichtelemente in dem Axialspalt können Flächendichtungen oder Dichtmassen sein.

Im Folgenden werden bevorzugte Ausführungsbeispiele der Erfindung anhand schematischer Darstellungen näher erläutert. Es zeigen
Figur leine perspektivische Darstellung eines zweigeteilten Flugzeugrumpfs,

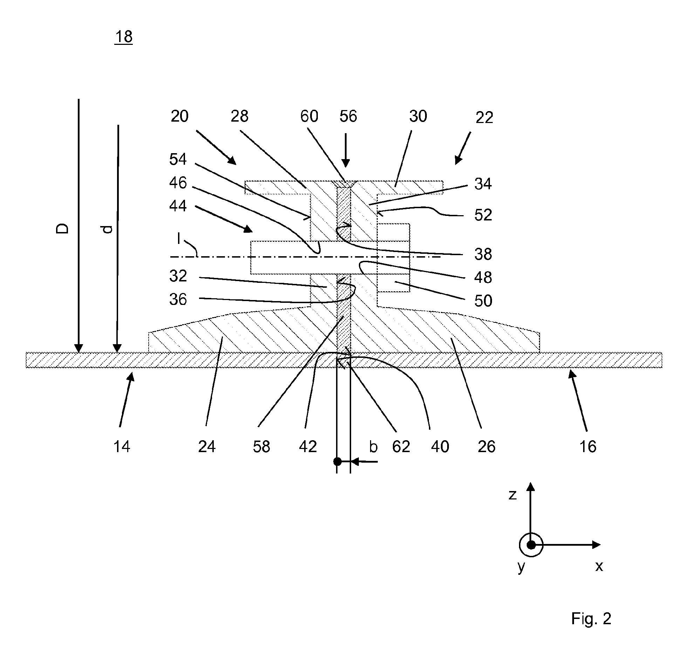

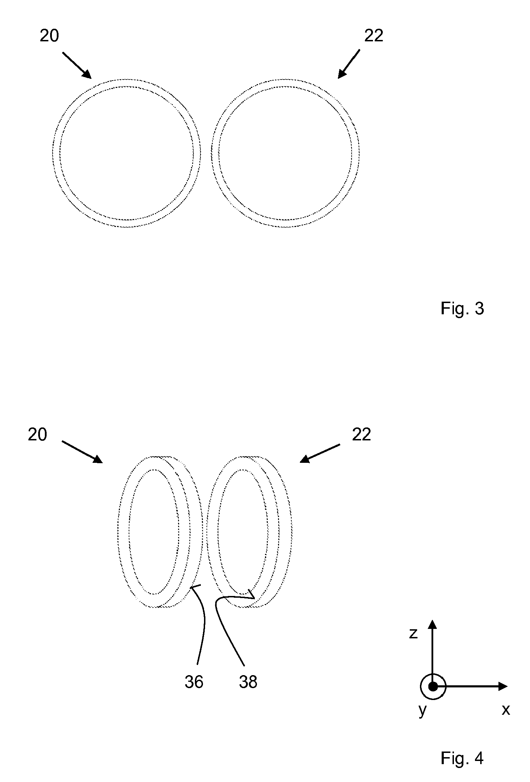

Figur 2 einen Querschnitt durch einen erfindungsgemäßen Querstoß, und die Figuren 3 bis 6 Verfahrensschritte zur Herstellung des Querstoßes aus Figur 2.

In den Figuren tragen gleiche konstruktive Elemente die gleichen Bezugsziffern

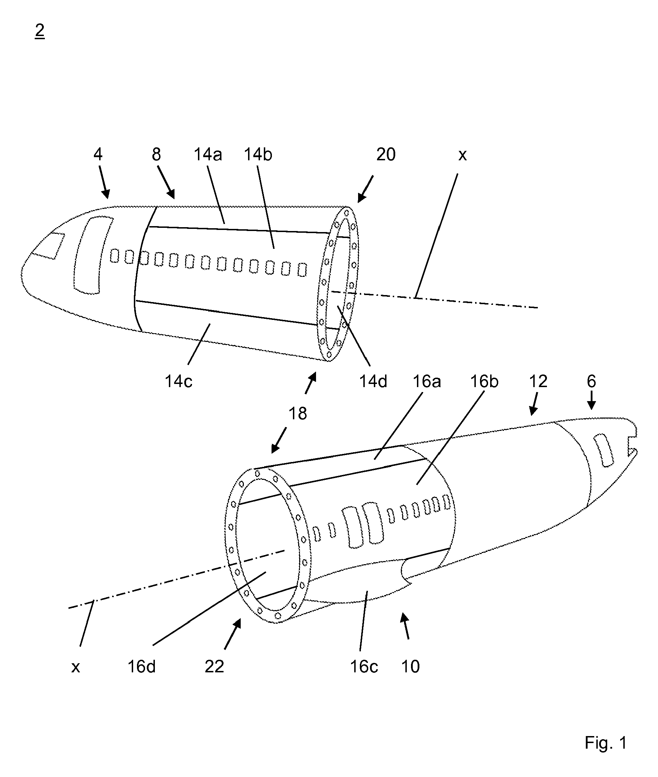

Figur 1 zeigt einen Flugzeugrumpf 2 mit einem Cockpit 4, einem Heckabschluss 6 und einer zwischen dem Cockpit 4 und dem Heckabschluss 6 angeordneten vorderen Rumpftonne 8, einer flügelseitigen Rumpftonne 10 und einer hinteren Rumpftonne 12. Die Rumpftonnen bzw. Rumpfsektionen 8, 10, 12 bestehen jeweils aus vier einzelnen Hautfeldern 14a, 14b, ..., 16a, 16b, ... die über sich in Richtung einer Flugzeuglängsachse x erstreckende nicht bezifferte Längsnähte miteinander verbunden sind.

Zum besseren Verständnis der Erfindung ist der gezeigte Flugzeugrumpf 2 im Querstoßbereich 18 zwischen der vorderen Rumpftonne 8 und der flügelseitigen Rumpftonne 10 geöffnet dargestellt. Erfindungsgemäß und stellvertretend für übrige Querstoßbereiche 18 des Flugzeugrumpfes 2 erfolgt die Verbindung dieser beiden Rumpftonnen 8, 10 über zwei ringartige Verbindungssegmente 20, 22, die in die Rumpftonnen 8, 10 eingesetzt sind und miteinander verspannt werden. Eine detaillierte Betrachtung der Verbindungssegmente 20, 22 erfolgt in den folgenden Figuren.

Figur 2 zeigt einen Querschnitt durch einen erfindungsgemäßen Querstoßbereich 18 mit zwei miteinander verspannten Verbindungssegmenten 20, 22. Die Verbindungssegmente 20, 22 sind aus einem beliebigen für die Luft- und Raumfahrt geeigneten Material wie Aluminium bzw. einer entsprechenden Materialmischung hergestellt. Sie bestehen aus einzelnen Bogensegmenten und sind über ihren Umfang geschlossen. Sie haben einen Außendurchmesser d, der einem Außendurchmesser D des Rumpfquerschnitts im Querstoßbereich 18 entspricht. Somit bilden die Verbindungssegmente 20, 22 den Rumpfquerschnitt im Querstoßbereich 18 ab. Sie haben jeweils einen Fußabschnitt 24, 26, einen Kopfabschnitt 28, 30 und einen sich zwischen diesen Abschnitten erstreckenden Steg 32, 34. Die Fußabschnitte 24, 26 sind jeweils keilförmig ausgebildet und innenumfangsseitig fest mit einem Hautfeld 14, 16, beispielsweise mittels nicht gezeigten Nieten, verbunden. Die Verbindungssegmente 20, 22 sind derart auf dem Hautfeld 14, 16 positioniert, dass jeweils eine sich von dem Fußabschnitt 24, 26 über den Steg 32, 34 zum Kopfabschnitt 28, 30 erstreckende Radialfläche 36, 38 bündig mit einer Ringfläche 40, 42 der Hautfelder 14, 16 abschließt.

Die Verbindungssegmente 20, 22 sind über eine Vielzahl von Verbindungselementen 44, insbesondere Zugbolzen, miteinander verbunden. Im miteinander verbundenen Zustand bilden die Verbindungssegmente 20, 22 einen zweigeteilten Spant bzw. eine Umfangsversteifung und übernehmen somit über die reine Funktion als Querstoß hinaus zusätzliche versteifende Funktionen.

Die Zugbolzen 44 erstrecken sich einreihig in Richtung der Flugzeuglängsachse x und sind in Umfangsrichtung y gleichmäßig voneinander beabstandet. Sie sind in den Verbindungssegmenten 20, 22 im Bereich von nicht gezeigten Stringern bzw. Längsversteifungen angeordnet, wodurch auf herkömmliche Stringerkupplungen im Querstoßbereich 18 verzichtet werden kann. Jeder Zugbolzen 44 ist in einem stegseitigen Bohrungspaar aufgenommen, das aus zwei Bohrungen 46, 48 besteht. Die Bohrungen 46, 48 sind jeweils in die Stege 32, 34 eingebracht und derart zueinander ausgerichtet, dass sie eine gemeinsame Bohrungslängsachse 1 bilden. Zum Verspannen der Verbindungssegmente 20, 22 liegen die Zugbolzen 44 jeweils mit ihrem Kopf 50 an einer Anlagefläche 52 des einen Steges 34 an und greifen mit einer nicht dargestellten Mutter an einer Spannfläche 54 des anderen Steges 32 an. Die Anlagefläche 52 und die Spannfläche 54 erstrecken sich jeweils in radialer Richtung und somit senkrecht zur Bohrungslängsachse 1.

Zwischen den Verbindungssegmenten 20, 22 bzw. zwischen ihren gegenüberliegenden Radialflächen 36, 38 ist ein Axialspalt 56 mit konstanter Breite b gebildet, der zum druckdichten Verbinden des Flugzeugrumpfes 2 mit einer Dichtungsmasse 58 befüllt ist. Im Bereich der Kopfabschnitte 28, 30 ist der Axialspalt 56 V-förmig erweitert und mit einer Dichtraupe 60 befüllt. Ein Spaltabschnitt zwischen den gegenüberliegenden Ringflächen 40, 42 der Hautfelder 14, 16 ist über eine aerodynamische Dichtraupe 62 verschlossen.

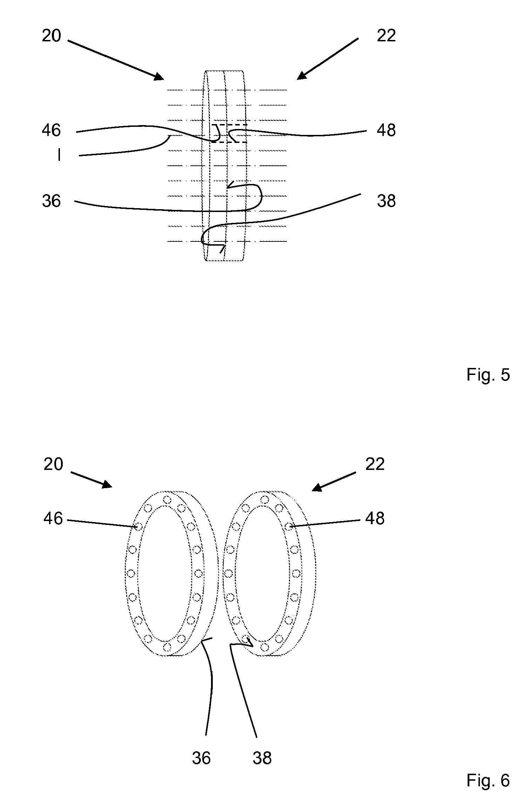

In den folgenden Figuren wird die Herstellung eines erfindungsgemäßen Querstoßes erläutert:
Gemäß Figur 3 werden zwei ringartige Verbindungssegmente 20, 22 bereit gestellt, die den Querschnitt eines Flugzeugrumpfes 2 im zu bildenden Querstoßbereich 18 abbilden. Dann werden die beiden Verbindungssegmente 20, 22 gemäß 4 zusammengeführt und derart zueinander ausgerichtet, dass ihre Radialflächen 36, 38 einander zugewandt sind und Bauteil- bzw. Fertigungstoleranzen zwischen den beiden Verbindungssegmenten 20, 22 eliminiert sind. Die Verbindungssegmente 20, 22 werden insbesondere so zueinander ausgerichtet, dass bei späterer Rumpftonnenmontage kein wesentlicher Versatz der Rumpftonnen 8, 10 um die Flugzeuglängsachse x auftritt. Nach der Ausrichtung werden die Radialflächen 36, 38 gemäß Figur 5 plan aneinandergelegt und es werden Bohrungen 46, 48 mit jeweils einer gemeinsamen Bohrungslängsachse 1 zur Aufnahme von Zugbolzen 44 bzw. vergleichbaren Verbindungselementen in die Verbindungssegmente 20, 22 eingebracht. Stellvertretend für alle Bohrungen bzw. Bohrungslängsachsen 1 ist lediglich ein Bohrungspaar beziffert. Die Bohrungen 46, 48 werden bereits auf Endmaß gefertigt, so dass eine spätere Reinigung der Bohrungen 46, 48 oder ein entsprechendes Nachbohren bei der Montage der Rumpftonnen 8, 10 entfällt. Nach dem Einbringen der Bohrungen 46, 48 bzw. Bohrungspaare werden die Verbindungssegmente 20, 22 gemäß Figur 6 getrennt und die Bohrungen 46, 48 werden entsprechend nachbearbeitet wie zum Beispiel entgratet. Dann werden die Verbindungssegmente 20, 22 einer Sektionsmontage übergeben und Rumpftonnen 8, 10 werden durch Anordnung bzw. Auflegen von Hautfeldern 14, 16 um die Verbindungssegmente 20, 22 herum aufgebaut (vgl. Figur 1). Die Befestigung der Hautfelder 14, 16 an Fußabschnitten 24, 26 der Verbindungssegmente 20, 22 erfolgt über Nieten. Nach Herstellung der Rumpftonnen 8, 10 werden diese einer Endmontage zum Verbinden der einzelnen Rumpftonnen 8, 10 im Querstoßbereich 18 zugeführt. Bei der Endmontage werden die Rumpftonnen 8, 10 entsprechend den Bohrungslängsachsen 1 der Bohrungen 46, 48 positioniert und es werden die Zugbolzen 44 in die Bohrungspaare eingesetzt. Dabei ist ein Toleranzausgleich zwischen den zu fügenden Rumpftonnen 8, 10 im Querstoßbereich 18 nicht notwendig, da dieser bereits beim Einbringen der Bohrungen 46, 48 in die Verbindungssegmente 20, 22 berücksichtigt wurde. Ebenso entfällt ein Endbohren der Bohrungen 46, 48, da sie bereits ihr Endmaß aufweisen und entsprechend gereinigt bzw. entgratet sind. Auf einer der Radialflächen 36, 38 wird eine Dichtmasse 58 aufgetragen und die Verbindungssegmente 20, 22 und somit die Rumpftonnen 8, 10 werden über die Zugbolzen 44 miteinander druckdicht verspannt (vgl. Figur 2). Abschließend wird eine radial innenliegende Dichtraupe 60 und eine radial außenliegende aerodynamische Dichtraupe 62 zwischen den Verbindungssegmenten 20, 22 bzw. den Hautfeldern 14, 16 angeordnet.

Offenbart ist ein Verfahren zur Herstellung eines Flugzeugrumpfes 2 mit zumindest zwei Rumpftonnen 8, 10, 12 wobei zuerst Verbindungssegmente 20, 22 zur Bildung eines Querstoßbereichs 18 für einen spätere Querstoß vorbereitet werden und dann die Rumpftonnen 8, 10, um die Verbindungssegmente 20, 22 herum aufgebaut werden, sowie ein Flugzeugrumpf 2 mit ringartigen Verbindungssegmenten 20, 22 zum Bilden eines derartigen Querstoßes.

### Bezugszeichenliste

- 2: Flugzeugrumpf
- 4: Cockpit
- 6: Heckabschluss
- 8: vordere Rumpftonne
- 10: flügelseitige Rumpftonne
- 12: hintere Rumpftonne
- 14: Hautfeld
- 16: Hautfeld
- 18: Querstoßbereich
- 20: Verbindungssegment
- 22: Verbindungssegment
- 24: Fußabschnitt
- 26: Fußabschnitt
- 28: Kopfabschnitt
- 30: Kopfabschnitt
- 32: Steg
- 34: Steg
- 36: Radialfläche
- 38: Radialfläche
- 40: Ringfläche
- 42: Ringfläche
- 44: Zugbolzen
- 46: Bohrung
- 48: Bohrung
- 50: Kopf
- 52: Anlagefläche
- 54: Spannfläche
- 56: Axialspalt
- 58: Dichtmasse
- 60: Dichtraupe
- 62: Dichtraupe

- x: Flugzeuglängsachse
- l: Bohrungslängsachse
- d: Außendurchmesser
- D: Außendurchmesser
- b: Breite
- y: Umfangsrichtung

## Patentansprüche

1. Verfahren zur Herstellung eines Flugzeugrumpfes (2) mit zumindest zwei Rumpftonnen (8, 10, 12), die in einem Querstoßbereich (18) miteinander zu verbinden sind, wobei für den Querstoß benötigte Querstoßelemente (20, 22, 44) eine Vielzahl von Verbindungselementen (44) und zwei ringartige Verbindungssegmente (20, 22) umfassen, die einen Rumpfquerschnitt im Querstoßbereich (18) abbilden, **dadurch gekennzeichnet, dass** die für den Querstoß benötigten Querstoßelemente (20, 22, 44) zueinander ausgerichtet und dabei für den späteren Querstoß vorbereitet und in einem Folgeschritt in die Rumpftonnen (8, 10) eingesetzt werden, und wobei die Vorbereitung der Querstoßelemente (20, 22, 44) ein Einbringen von Aufnahmen (46, 48) in die Verbindungssegmente (20, 22) zur Aufnahme der Verbindungselemente (44) umfasst.

2. Verfahren nach Anspruch 1, mit den Schritten:
a) Bereitstellen zweier ringartiger Verbindungssegmente (20, 22), die einen Rumpfquerschnitt im Querstoßbereich (18) abbilden,
b) Zusammenführen und Ausrichten der Verbindungssegmente (20, 22) zueinander,
c) Einbringen von Aufnahmen (46, 48) in die Verbindungssegmente (20, 22) zur Aufnahme von Verbindungselementen (44),
d) Trennen der Verbindungssegmente (20, 22),
e) Herstellen von zwei Rumpftonnen (8, 10) durch Anordnung von Hautfeldern (14, 16) an den Verbindungssegmenten (20, 22), und
f) Verbinden der Rumpftonnen (8, 10) durch Zusammenführen der beiden Verbindungssegmente (20, 22) und durch Einsetzen der Verbindungselemente (44).

3. Verfahren nach einem der vorherigen Ansprüche, wobei die Aufnahmen (46, 48) Bohrungen (46, 48) sind, die Radialflächen (36, 38) der Verbindungssegmente (20, 22) durchsetzen.

4. Verfahren nach einem der vorherigen Ansprüche, wobei die Verbindungselemente (44) einreihig nebeneinander angeordnet sind.

5. Verfahren nach einem der vorherigen Ansprüche, wobei die Verbindungselemente (44) im Bereich von Stringern angeordnet sind.

6. Verfahren nach einem der vorherigen Ansprüche, wobei die Verbindungselemente (44) Zugbolzen sind.

7. Verfahren nach einem der vorherigen Ansprüche, wobei die Radialflächen (36, 38) bündig mit jeweils einer Ringfläche (40, 42) der Rumpftonnen (8, 10) abschließen.

8. Verfahren nach einem der vorherigen Ansprüche, wobei in einem Axialspalt (56) zwischen den Radialflächen (36, 38) zumindest zwei unterschiedliche Dichtelemente (58, 60, 62) angeordnet sind.

9. Verfahren nach einem der vorherigen Ansprüche, wobei die Verbindungssegmente (20, 22) im montierten Zustand einen Spant bilden.

## Claims

1. Method for manufacturing an aircraft fuselage (2) with at least two fuselage barrels (8, 10, 12) to be interconnected in a transverse joint region (18), wherein transverse joint elements (20, 22, 44) required for the transverse joint comprise a plurality of connecting elements (44) and two ring-type connecting segments (20, 22) forming a fuselage cross-section in the transverse joint region (18), **characterised in that** the transverse joint elements (20, 22, 44) required for the transverse joint are oriented facing one another and, as such, are prepared for the subsequent transverse joint and in a subsequent step are inserted into the fuselage barrels (8, 10), and wherein the preparation of the transverse joint elements (20, 22, 44) comprises placing sockets (46, 48) into the connecting segments (20, 22) to accommodate the connecting elements (44).

2. Method according to claim 1, with the steps:
a) providing of two ring-type connecting segments (20, 22) that form a fuselage cross-section in the transverse joint region (18),
b) converging and aligning of the connecting segments (20, 22) with one another,
c) inserting of sockets (46, 48) in the connecting segments (20, 22) to accommodate connecting elements (44),
d) separating of the connecting segments (20, 22),
e) producing of two fuselage barrels (8, 10) by arranging skin fields (14, 16) at the connecting segments (20, 22), and
f) joining of the fuselage barrels (8, 10) by bringing together the two connecting segments (20, 22) and by inserting the connecting elements (44).

3. Method according to any one of the preceding claims, wherein the sockets (46, 48) are bore holes (46, 48) which pass through radial faces (36, 38) of the connecting segments (20, 22).

4. Method according to any one of the preceding claims, wherein the connecting elements (44) are arranged adjacent to one another in a single row.

5. Method according to any one of the preceding claims, wherein the connecting elements (44) are arranged in the region of stringers.

6. Method according to any one of the preceding claims, wherein the connecting elements (44) are tie bolts.

7. Method according to any one of the preceding claims, wherein the radial faces (36, 38) each close flush with one of the ring faces (40, 42) of the fuselage barrels (8, 10).

8. Method according to any one of the preceding claims, wherein at least two different sealing elements (58, 60, 62) are provided in an axial gap (56) between the radial faces (36, 38).

9. Method according to any one of the preceding claims, wherein the connecting segments (20, 22) form a frame in the assembled state.

## Revendications

1. Procédé de fabrication d'un fuselage d'avion (2) comportant au moins deux tronçons de fuselage (8, 10, 12), qui sont à relier l'un à l'autre dans une zone de jointure transversale (18), des éléments de jointure transversale (20, 22, 44) nécessaires pour la jointure transversale comprenant une pluralité d'éléments de liaison (44) et deux segments de liaison annulaires (20, 22), qui représentent une section transversale de fuselage dans la zone de jointure transversale (18), **caractérisé en ce que** les éléments de jointure transversale (20, 22, 44) nécessaires pour la jointure transversale sont alignés les uns avec les autres et ainsi préparés pour la jointure transversale ultérieure et ils sont placés dans les tronçons de fuselage (8, 10) dans une étape suivante, et la préparation des éléments de jointure transversale (20, 22, 44) comprenant la réalisation de logements (46, 48) dans les segments de liaison (20, 22) pour recevoir les éléments de liaison (44) .

2. Procédé selon la revendication 1, comprenant les étapes consistant à :
a) fournir deux segments de liaison annulaires (20, 22), qui représentent une section transversale de fuselage dans la zone de jointure transversale (18),
b) rapprocher et aligner les segments de liaison (20, 22) entre eux,
c) réaliser des logements (46, 48) dans les segments de liaison (20, 22) pour recevoir des éléments de liaison (44),
d) séparer les segments de liaison (20, 22),
e) fabriquer deux tronçons de fuselage (8, 10) en agençant des champs de peau (14, 16) sur les segments de liaison (20, 22), et
f) relier les tronçons de fuselage (8, 10) en rapprochant les deux segments de liaison (20, 22) et en plaçant les éléments de liaison (44).

3. Procédé selon l'une des revendications précédentes, dans lequel les logements (46, 48) sont des alésages (46, 48), qui traversent des surfaces radiales (36, 38) des segments de liaison (20, 22).

4. Procédé selon l'une des revendications précédentes, dans lequel les éléments de liaison (44) sont disposés en une rangée les uns à côté des autres.

5. Procédé selon l'une des revendications précédentes, dans lequel les éléments de liaison (44) sont disposés au niveau de lisses.

6. Procédé selon l'une des revendications précédentes, dans lequel les éléments de liaison (44) sont des boulons tirants.

7. Procédé selon l'une des revendications précédentes, dans lequel les surfaces radiales (36, 38) se terminent à fleur respectivement d'une surface annulaire (40, 42) des tronçons de fuselage (8, 10).

8. Procédé selon l'une des revendications précédentes, dans lequel au moins deux éléments d'étanchéité (58, 60, 62) différents sont disposés dans un interstice axial (56) entre les surfaces radiales (36, 38).

9. Procédé selon l'une des revendications précédentes, dans lequel les éléments de liaison (20, 22) à l'état monté forment un couple.
